# EUROPEAN PATENT APPLICATION

(11) **EP 2 754 915 A2**
(43) Date of publication of application: **16.07.2014**
(21) Application number: 13197617.7
(22) Date of filing: 17.12.2013
(51) Int. Cl.: F16F 9/02, F16F 9/43

(54) **Gas spring and overpressure relief plug**

(30) Priority: 10.01.2013 US 201361750935 P; 13.12.2013 US 201314105775
(71) Applicant: Dadco, Inc., Plymouth MI 48170 (US)
(72) Inventor: Moss, James, W, Plymouth, MI Michigan 48170 (US)
(74) Representative: Heyer, Volker

(57) **Abstract**

An overpressure relief plug including a rupture disc and engaging a fill valve in series downstream fluid communication with respect thereto. A gas spring may include a fill port, and the overpressure relief plug and the fill valve in the fill port.

## Description

### Technical Field

This invention relates generally to gas springs and, more particularly, to fill valves and overpressure relief devices for gas springs.

### Background

Gas springs are well known and have been used in dies of presses for sheet metal stamping operations. For example, gas springs can be used as press cushions, among many other types of applications. A conventional gas spring includes a casing, a piston rod carried in the casing, a bearing and sealing housing held in the casing by a retainer to guide and retain the piston rod within the casing, and a pressure chamber to hold pressurized gas, typically nitrogen at an operating pressure of, for example, 2,000 to 5,000 PSI in some applications. The housing includes one or more bearings to guide movement of the piston rod within the casing, and one or more seals to prevent leakage from the pressure chamber. The pressurized gas biases the piston rod to an extended position, and yieldably resists movement of the piston rod from the extended position to a retracted position. Typically, a fill valve is carried in a fill port of the casing to allow the pressurized gas to be introduced into the pressure chamber. In some implementations, the gas spring also includes a rupture disc arranged in another port of the casing separate from and parallel to the fill valve.

### Summary

In at least one implementation, a gas spring for forming equipment includes a casing including an axially extending side wall, an open end, a transversely extending closed end wall axially spaced from the open end, and a pressure chamber established in part by the side and end walls to receive a gas under pressure. The gas spring also includes a piston rod received at least in part in the casing and extending through a piston rod housing and the casing for reciprocation between extended and retracted positions. The gas spring further includes a fill valve in fluid communication with the pressure chamber and extending along a valve axis, and a rupture disc in fluid communication with the pressure chamber in series downstream fluid communication with the fill valve.

In another implementation, an overpressure relief plug extends axially along a longitudinal axis, and includes a plug housing, a rupture disc carried by the plug housing, and a disc retainer carried by the plug housing to retain the rupture disc to the plug housing. The plug housing includes a first open end, a second open end, and a through passage extending along the longitudinal axis between the open ends. The disc retainer includes a first end, a second end extending axially beyond the first end of the plug housing and having an end wall extending transversely across the longitudinal axis, and a retainer passage between the first and second ends of the retainer in fluid communication with the rupture disc, and including a central passage extending along the longitudinal axis and communicating with a port transversely oriented with respect to the longitudinal axis.

Some potential objects, features and advantages of the gas spring and/or its components set forth herein include providing a device that is readily usable with a wide range of forming equipment, readily permits use of common components among gas springs of different configuration and construction, can be easily serviced and its components replaced as needed, can be used in a wide range of applications having different size and force requirements, is readily adaptable to a wide range of press configurations, includes a rupture disc in series downstream fluid communication with a fill valve in a common passage, and is of relatively simple design, economical manufacture and assembly, robust, durable, reliable and in service has a long useful life. Of course, an apparatus embodying the present invention may achieve, none, some, all or different objects, features or advantages than those set forth with regard to the illustrative embodiments disclosed herein.

### Brief Description of the Drawings

The following detailed description of preferred embodiments and best mode will be set forth with regard to the accompanying drawings in which:
FIG. 1 is a sectional view of an illustrative embodiment of a gas spring, illustrating a piston rod in a retracted position, and a normally closed fill valve cartridge carried by a fill port of the gas spring and engaged by an overpressure relief plug to retain a fill valve in an open position;
FIG. 2 is an enlarged, exploded, fragmentary, sectional view of a portion of the gas spring of FIG. 1, illustrating the fill valve cartridge in an installed, closed position, and illustrating the overpressure relief plug positioned for insertion into the fill port of the gas spring;
FIG. 3 is similar to FIG. 2, but illustrates the overpressure relief plug partially installed in the fill port of the gas spring with initial sealing and engagement between the plug and the cartridge;
FIG. 4 is similar to FIG. 3, but illustrates the overpressure relief plug fully installed in the fill port of the gas spring with complete sealing and engagement of the plug and the cartridge to retain the fill valve in an open position;
FIG. 5 is an enlarged perspective view of a rupture disc retainer for the overpressure relief plug of FIG. 1;
FIG. 6 is an end view of an overpressure relief plug in accordance with another illustrative embodiment, and including a rupture disc retained in a plug housing by a retainer;
FIG. 7 is a cross-sectional view of the plug of FIG. 6, taken along line 7-7 of FIG. 6; and
FIG. 8 is a perspective view of the plug housing of FIG. 6.

### Detailed Description of Preferred Embodiments

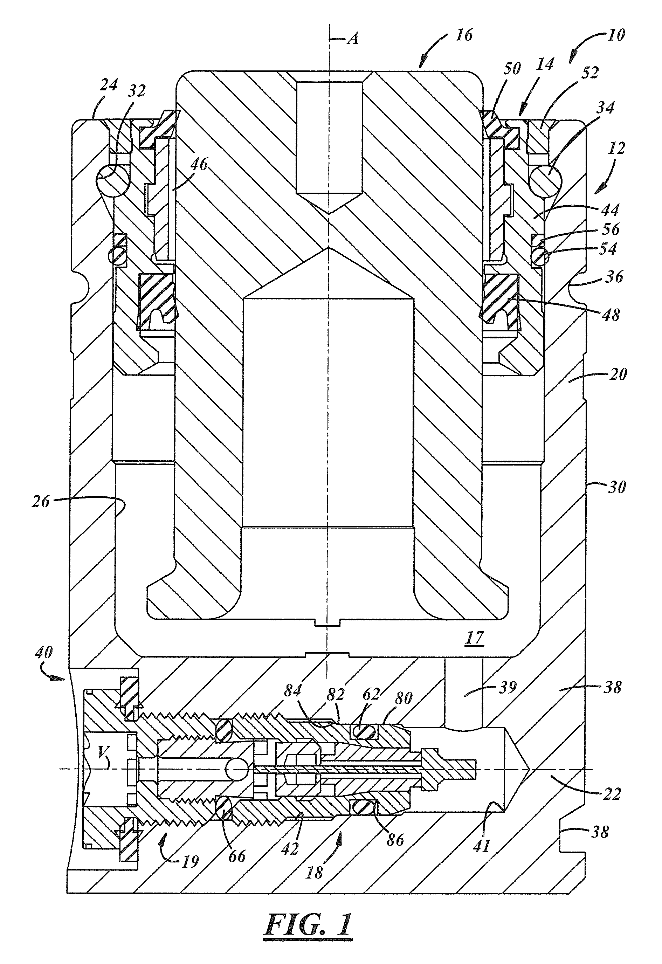

Referring in more detail to the drawings, FIG. 1 illustrates a gas spring 10 that may be used in forming equipment, for example, sheet metal stamping dies and mechanical presses (not shown). In general, the gas spring 10 may include a casing 12, a guide and seal assembly 14 carried by the casing 12, a piston rod 16 carried by the casing 12 and extending through the guide and seal assembly 14, and a pressure chamber 17. According to the present disclosure, the gas spring 10 includes a fill valve cartridge 18 in downstream fluid communication with the pressure chamber 17, and an overpressure relief plug 19 engaged with the cartridge 18 in series downstream fluid communication with respect thereto. The cartridge 18 and the plug 19 may be carried by the casing 12, or by any other suitable portion of the gas spring 10.

As will be discussed in greater detail below, the valve cartridge 18 may function to allow pressurized gas to be communicated into and out of the pressure chamber 17, and the cartridge 18 and the plug 19 may function to provide protection against overpressure of gas in the pressure chamber 17. By itself, the cartridge 18 may act as a normally closed valve, which may be opened to allow gas to be admitted into or removed from the pressure chamber 17 of the gas spring 10. In combination with the cartridge 18, during overpressure conditions in the chamber 17, the plug 19 is configured to vent gas from the pressure chamber 17 to the atmosphere. The plug 19 may be removed and the cartridge 18 opened, for example by valve depression, to release pressurized gas from within the pressure chamber 17 of the gas spring 10, when desired.

The casing 12 may include a side wall 20 that may terminate axially at a closed end 22, and at an open end 24 that receives the guide and seal assembly 14 and the piston rod 16 therein. The pressure chamber 17 is established at least in part by the side and end walls 20, 22 to receive a gas under pressure. The closed end 22 may be a separate component attached to the side wall 20, for example by a weld joint, or may be integrally produced with the side wall 20. The side wall 20 of the casing 12 has an inner surface 26 defining at least in part the pressure chamber 17, and an outer surface 30. The casing 12 may be of generally cylindrical shape, for example, wherein at least one of the inner or outer surfaces 26, 30 is cylindrical. The inner surface 26 of the side wall 20 may have a circumferential retainer groove 32 constructed for receipt of a retainer, shown here by way of example as a snap ring 34, to maintain the gas spring 10 in its assembled state. To facilitate mounting and locating the gas spring 10 within a press, a pair of longitudinally spaced circumferential grooves 36, 38 may be machined, formed, or otherwise provided in the outer surface 30 of the casing 12 adjacent its ends 22, 24. To admit gas into the gas spring 10, the casing 12 may include a passage or fill port 40 that may be provided through the closed end 22 of the casing 12 in any suitable manner. In other embodiments, although not illustrated, the fill port 40 may be provided in another portion of the gas spring 10, for example, in the piston rod 16. In any case, the fill port 40 may include a threaded passage 42 for coupling of the fill valve cartridge 18 to the casing 12. The closed end 22 of the casing also may include a passage 39 in fluid communication between and with the pressure chamber 17 and the fill port 40.

The guide and seal assembly 14 may be disposed in the open end 24 of the casing 12 and may be sealingly coupled to the casing 12. The assembly 14 may include a piston rod housing 44, and a guide bushing 46, a rod seal 48, a rod wiper 50, a dust cover 52, a casing seal 54, and a support ring 56, all of which may be carried by the housing 44. The guide bushing 46 may be composed of any suitable low friction material, and may be sized to slidably engage the piston rod 16 to guide the piston rod 16 for axial reciprocation within the casing 12. The housing 44 may include a shoulder in the outer surface to cooperate with the snap ring 34, which removably retains the housing 44 in the casing 12.

The piston rod 16 is disposed at least in part in the casing 12 and through the guide and seal assembly 14 for reciprocation along an axis A between extended and retracted positions over a cycle of the gas spring 10 including a retraction stroke and an extension or return stroke. The piston rod 16 is acted on by gas in the pressure chamber 17 to bias the piston rod 16 toward an extended position, and away from the retracted position. The piston rod 16 extends out of the casing 12 through the guide and seal assembly housing 44, and includes an outer axial end engageable with a ram or other portion of a press, a die component, or other piece of forming equipment (not shown), and an inner axial end disposed in the casing 12 and that may be radially enlarged and engageable with a portion of the piston rod housing 44 to retain the piston rod 16 in the casing 12. The piston rod 16 is in sealing engagement with the rod seal 48 and in sliding engagement with the piston rod bushing 46 for guided relative movement between the extended and retracted positions.

The valve cartridge 18 may be sealingly carried by or coupled to the casing 12, and may include a valve housing 60 received in the fill port 40 of the casing 12, a seal 62 between the valve housing 60 and the casing 12, and a fill valve assembly 64 carried by the valve housing 60. The valve assembly 64 may be a pneumatic tire inflation valve assembly, commonly known as a Schrader valve, or any other suitable valve assembly.

The valve housing 60 may include a first open end 59, a second open end 61, and a valve passage 68 between the open ends 59, 61. The first end 59 of the valve housing 60 may include an external fastener portion 70, a counterbore 72 coaxial with the valve passage 68, a second counterbore 74 coaxial with the valve passage 68, and tooling features 76. The fastener portion 70 may include external threads, and the tooling features 76 may include internal flats, hexagonal counterbore, or other internal surface geometry to cooperate with any suitable non-circular tool to install the valve housing 60 into the port 40. The first open end 59 of the valve housing 60 may have a first diameter, for example, established by the external fastener portion 70, and the valve housing 60 also may have a second diameter 78 between the open ends 59, 61 that is smaller than the first diameter 70. The valve housing 60 also may include a third diameter 80 between the first and second diameters 70, 78, and a shoulder 82 between the second and third diameters 78, 80 to axially engage a corresponding shoulder 84 of the casing 12 within the fill port 40 to thereby limit the extent to which the valve housing 60 can be threaded into the casing 12.

The housing seal 62 may be carried by the valve housing 60, and may include a journal or radial seal carried externally around the valve housing 60. For example, the seal 62 may be carried in a corresponding external groove 86 in the second diameter 78 of the valve housing 60, and may contact a corresponding smooth cylindrical surface of the fill port 40. The seal 62 may include an O-ring and may be elastomeric and, more specifically, may be composed of polyurethane, Buna-N (nitrile), VITON, silicone, or any other suitable seal material. For example, the seal 62 may have a durometer on the Shore A scale (ASTM 2240) of between 20 and 60 for silicone materials, or between 60 and 95 for nitrile and VITON materials.

The valve assembly 64 may include a relatively stationary valve seat 88, a relatively movable fill valve 90 carried in and by the valve seat 88, and a valve retainer 92 to retain the valve assembly 64 in the valve housing 60. The valve 90 may include a valve head 94 at one end and a valve stem 96 extending from the valve head 94 and terminating at another end. The valve 90 may reciprocate with respect to the valve housing 60 along a longitudinally extending valve axis V, according to rectilinear motion. The valve seat 88 may carry a seal 95 for sealing between the valve seat 88 and the valve housing 60. The seal 95 may be composed of any suitable elastomeric material, and may be of conical shape for sealing engagement with corresponding external and internal conical surfaces of the valve seat 88 and housing 60. Although not shown, the valve assembly 64 further may or may not include a spring to bias the valve 90 to a normally closed position against the valve seat 88. The spring may be disposed between any suitable portions of the valve 90 and valve seat 88, or in any other suitable location. The valve retainer 92 may be externally threaded for complimentary threaded engagement with corresponding internal threads of the valve housing 60, or may be coupled thereto in any other suitable manner.

The overpressure relief plug 19 may include a plug housing 98, a seal 100 that may be carried by the plug housing 98 to seal the plug 19 to the casing 12, a rupture disc 102 carried by the plug housing 98, and a retainer 104 carried by the plug housing 98 to retain the rupture disc 102 to the plug housing 98. In other embodiments, the rupture disc 102 may be welded to the plug housing 98, integral therewith, coupled thereto with adhesive, or carried thereby in any other suitable manner. The plug 19 also may include the seal 66 carried around the retainer 104. In the illustrated embodiment, both seals 66, 100 are used. But in other embodiments, only the retainer seal 66 may be used, or only the plug seal 100 may be used. In the latter embodiment, the plug seal 100 may need to be a custom designed seal to ensure a good sealing condition.

The plug housing 98 may include a first open end 106 that may have a cylindrical portion with external threads for complimentary threaded engagement with the threaded passage 42 of the casing 12, and a second open end 108 that may have a head or flange for sealing to the casing 12 via the plug housing seal 100. The plug housing 98 also includes a through passage 110 extending along the valve axis V between the open ends 106, 108 in fluid communication with the rupture disc 102. The second open end 108 of the plug housing 98 also may include an outer counterbore 112 in fluid communication with the rupture disc 102, and the first end of the plug housing 98 further may include a retainer counterbore 114 in which the rupture disc 102 and the retainer 104 may be received. The counterbore 114 may have internal threads that may be engaged with complimentary external threads of the retainer 104. The head of the second open end 108 may have an outer diameter larger than that of the cylindrical portion of the first open end 106, and the counterbore 112 of the second open end 108 may include a non-circular fastener tool passage in fluid communication with the through passage 110 and having tooling features, for example, to accept an Allen wrench or any other suitable fastening tool (not shown).

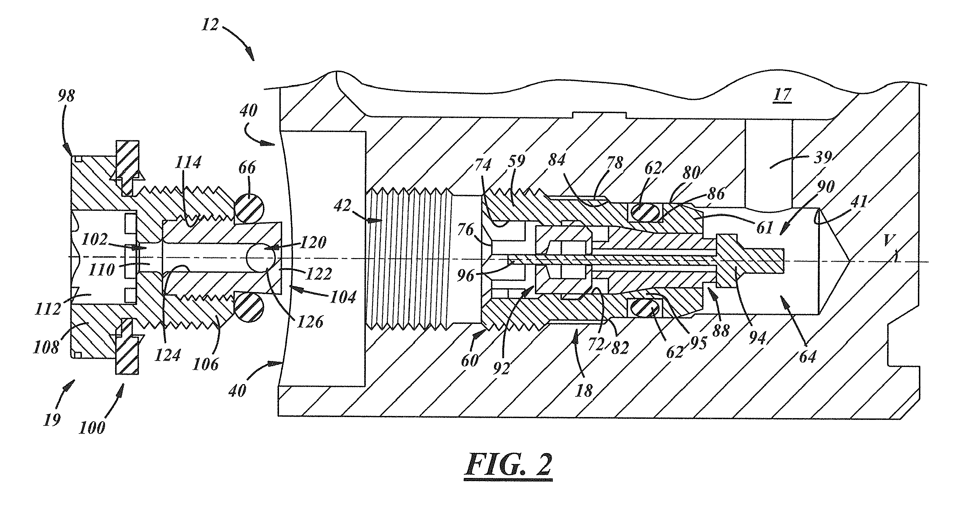

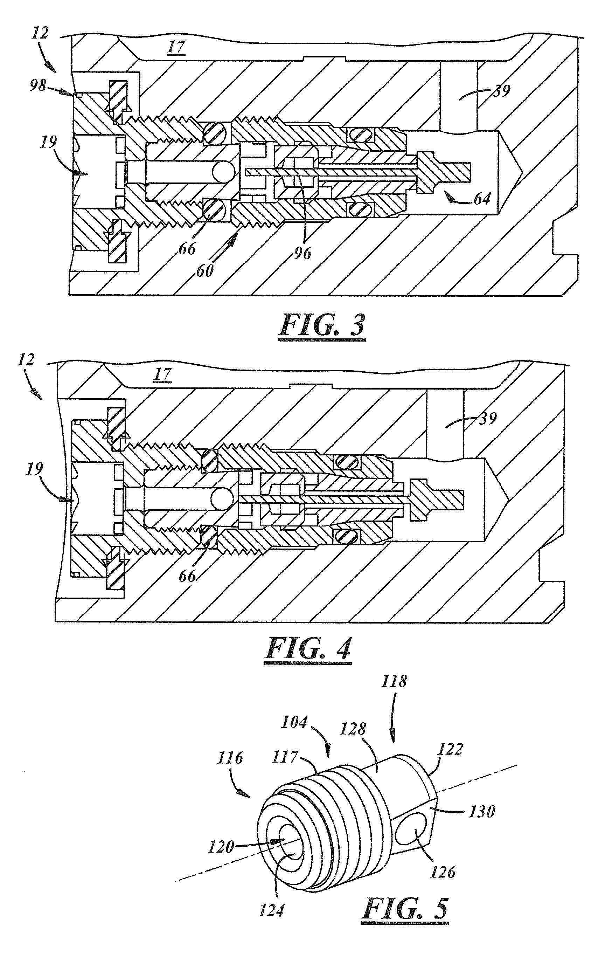

As also shown in FIG. 5, the retainer 104 may be a generally annular component that may include a first end 116, a second end 118, and a retainer passage 120 between the first and second ends 116, 118 and in fluid communication with the rupture disc 102 (FIG. 2). The first end 116 may have a cylindrical portion 117 with external threads for threaded engagement with complimentary internal threads of the first end cylindrical portion of the plug housing 98 (FIG. 2). As shown in FIG. 2, the second end 118 may extend axially beyond the first end 106 of the plug housing 98 and may have an end wall 122 extending transversely across the valve axis V. The retainer passage 120 may include a central passage 124 extending along the valve axis V, and a passage or port 126 transversely oriented with respect to the valve axis V and communicating with the central passage 124. As shown in FIG. 5, the retainer 104 also may include a reverse conical taper 128 between the transversely extending end wall 122 and the retainer cylindrical portion 117. The taper 128 may assist in retaining the seal 66 on the retainer 104. In other embodiments, the taper 128 may be omitted in favor of a seal groove or a lip to carry the seal 66, or in favor of an insert molded seal carried around a generally cylindrical end of the retainer 104. The retainer 104 further may include non-circular external tooling features 130, for example, opposed fastener flats to accept a wrench or other fastening tool (not shown) thereon. The tooling features 130 may intersect the reverse conical taper 128, and the transversely oriented port 126 may extend transversely through the taper 128.

The valve seal 66 may include an axial or face seal disposed between the valve cartridge 18 and the plug 19. More specifically, the seal 66 may engage corresponding sealing surfaces of the plug housing 98 and the valve housing 60 when the plug 19 is fully installed into the port 40 as illustrated in FIG. 4. And, when the plug 19 is so installed, a fluid overpressure relief path is established between the pressure chamber 17 and the rupture disc 102. The seal 66 may include a static O-ring and may be elastomeric and, more specifically, may be composed of polyurethane, Buna-N (nitrile), VITON, silicone, or any other suitable seal material. For example, the seal 66 may have a durometer on the Shore A scale (ASTM 2240) of between 20 and 60 for silicone materials, or between 60 and 95 for nitrile and VITON materials. In other embodiments, the seal 66 may include a sliding O-ring, a thread seal, for example, a NYLOK brand seal, a washer face seal, a custom seal, or any other suitable type of seal.

In assembly and operation, and with reference to FIG. 1, the guide and seal assembly 14 and the piston rod 16 may be assembled into the casing 12 and retained therein in any suitable manner. For the valve cartridge 18, the housing seal 62 may be placed over the second diameter 78 of the housing 60 and into the seal groove 86. Thereafter, and with reference to FIG. 2, the valve cartridge 18 may be inserted into the port 40 of the casing 12, for example, by threading it therein to a set depth, for example, via threading with the port threads 42 until the corresponding shoulders 82, 84 engage.

Then, any suitable pressurizing device (not shown) may be coupled to the port threads 42 to introduce pressurized gas into the port 40. A portion of the pressurizing device will engage the valve stem 96 to displace the valve 90 further into the port 40 so as to unseat the valve head 94 from the valve seat 88. Accordingly, pressurized gas will flow around the valve 90, between the valve 90 and the valve seat 88, around the valve head 94, and through a clearance between the valve head 94 and the passages 41, 39, and into the pressure chamber 17. Once a desired pressure is reached, the pressurizing device may be retracted to allow the valve head 94 to seat against the valve seat 88 and thereby seal the pressurized gas within the pressure chamber 17. Gas may be discharged from within the pressure chamber 17 by forcing the stem 96 of the valve 90 to move along its axis V into the casing 12 and away from the valve seat 88 to open the valve 90.

Subsequently, and with reference to FIG. 3, the overpressure relief plug 19 is inserted into the port 40, for example, by threading the plug housing 98 to the port threads 42. The seal 66 engages and becomes compressed by corresponding sealing surfaces of the plug housing 98 and the valve housing 60. Also, after initial seal engagement and upon further threading of the plug 19 into the port 40, the retainer end wall 122 engages and moves the valve stem 96 to depress the valve 90 and thereby unseat the valve head 94 from the valve seat 88 and thereby begin to open the valve assembly 64. Accordingly, the overpressure relief plug 19 engages the fill valve 90 in series downstream fluid communication with respect thereto.

With reference to FIG. 4, as the plug 19 continues to be inserted into the port 40, the seal 66 continues to be compressed and the valve assembly 64 continues to be opened, such that a sealed fluid overpressure relief flow path is established between the pressure chamber 17 and the rupture disc 102. The plug 19 may be inserted into the casing 12 to a set depth, for example, by threading the housing 98 with the port threads 42 until the housing 98 seals tightly against the casing 12 and/or a certain torque limit is reached. Thereafter, overpressure within the pressure chamber 17 may be relieved when a force on the rupture disc 102 due to the overpressure condition exceeds the strength of the rupture disc 102. Accordingly, the disc 102 ruptures and allows gas to flow from the pressure chamber 17, through the passage 39, through the clearance between the passage 41 and the valve head 94, through the open valve assembly 64 and the housing 60, through the retainer passage 120 and the ruptured disc 102, through the counterbore 112, and out of the gas spring 10.

Accordingly, the gas spring 10 includes both a fill valve and a rupture disc in series fluid communication with the pressure chamber 17 in a common passage of the gas spring 10 and, more specifically, the gas spring 10 may include the fill valve cartridge 18 in the existing fill port 40 of the gas spring casing 12 and the overpressure relief plug 19 in a series downstream position and communication with the cartridge 18. In other words, the cartridge 18 and the plug 19 are carried in a common fill port of the gas spring 10. This allows for less machining, complexity, and cost during manufacturing and assembly, and provides a more flexible gas spring design. In fact, the presently disclosed design allows an end user to retrofit existing gas springs for use with the valve cartridge 18. This design also allows an end user to replace a ruptured disc and to install discs which rupture at different overpressures.

The gas spring 10 may be assembled in any suitable manner and its various components may be manufactured in any suitable manner and composed of any suitable materials. For example, the casing 12 may be turned, bored, drilled, tapped, and/or otherwise machined from tube and/or bar stock. In another example, the retainer and the valve housing may be machined from bar stock, for example, of steel, brass, or any other suitable material(s). In other examples, the plug housing, valve, or other portions may be purchased items.

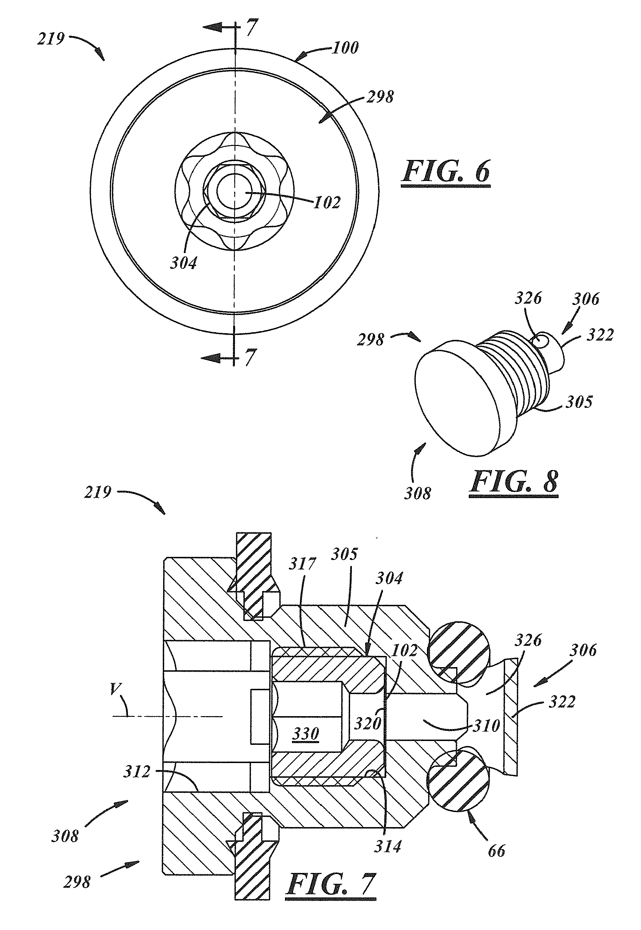

FIGS. 6-8 illustrate another presently preferred form of an overpressure relief plug 219. This form is similar in many respects to the form of FIGS. 1-7 and like numerals between the forms generally designate like or corresponding elements throughout the several views of the drawing figures. Accordingly, the description of the plug 19 is incorporated into the following description of the plug 219 by reference in its entirety. Additionally, the description of the common subject matter generally may not be repeated here.

With reference to FIG. 6, the overpressure relief plug 219 may include a plug housing 298, the seal 100 carried by the plug housing 298, the rupture disc 102 carried by the plug housing 298, and a retainer 304 carried by the plug housing 298 to retain the rupture disc 102 to the plug housing 298.

With reference to FIG. 7, the plug 219 also may include the seal 66 carried around a portion of the housing 298. The plug housing 298 may include a body 305 that may include a cylindrical portion with external threads, a first end 306, and an open, second end 308 that may have a head or flange. The plug housing 298 also includes a passage 310 extending along a valve axis V between the ends 306, 308 in fluid communication with the rupture disc 102. The second end 308 of the plug housing 298 also may include a first outer or retainer counterbore 314 in which the rupture disc 102 and the retainer 304 may be received, and a second outer or tooling counterbore 312 in fluid communication with the rupture disc 102. The counterbore 314 may have internal threads that may be engaged with complimentary external threads of the retainer 304.

As also shown in FIG. 7, the retainer 304 may be a generally annular component that may include a through retainer passage 320 in fluid communication with the rupture disc 302. The retainer 304 may have a cylindrical portion 317 with external threads for threaded engagement with complimentary internal threads of the plug housing 298. The retainer 304 further may include non-circular external tooling features 330, for example, internal flats to accept an Allen wrench or other fastening tool (not shown) therein.

The housing 298 may have an end wall 322 extending transversely across the valve axis V, the passage 310, and a passage or port 326 transversely oriented with respect to the valve axis V and communicating with the passage 310. The housing 298 also may include a reverse conical taper between the transversely extending end wall 322 and the threaded cylindrical body 305 to assist in retaining the seal 66 on the housing 298.

When installed in the gas spring 10, the end wall 322 engages and moves the valve stem 96 (FIG. 1) to depress the valve 90 (FIG. 1) and thereby unseat the valve head 94 (FIG. 1) from the valve seat 88 (FIG. 1) and thereby begin to open the valve assembly 64 (FIG. 1).

One or more of the gas springs 10 may be used in various implementations in forming equipment to provide a moveable component or support of a forming die or a workpiece with a yielding force or a return force. For example, in a binder ring implementation, the gas spring 10 may provide a yielding force against a binder ring of a forming die to hold a metal workpiece while another part of the forming die forms, cuts, stretches, or bends the workpiece. In a lifter implementation, the gas spring 10 may provide a yielding force and return force to lift a workpiece off a surface of the forming die or to otherwise maintain control of the workpiece. In a cam tool implementation, the gas spring 10 may apply a yielding force to return a cam-activated tool to its home position. Of course, the gas spring 10 may be used in a wide range of other applications and implementations.

It should be appreciated that one of ordinary skill in the art will recognize other embodiments encompassed within the scope of this invention. The plurality of arrangements shown and described above are merely illustrative and not a complete or exhaustive list or representation. Of course, still other embodiments and implementations can be achieved in view of this disclosure. The embodiments described above are intended to be illustrative and not limiting. The scope of the invention is defined by the claims that follow.

## Claims

1. A gas spring for forming equipment, comprising:
a casing including an axially extending side wall, an open end, a transversely extending closed end wall axially spaced from the open end, and a pressure chamber established in part by the side and end walls to receive a gas under pressure,
a piston rod housing received at least in part in the casing;
a piston rod received at least in part in the casing and extending through the piston rod housing and the casing for reciprocation between extended and retracted positions;
a fill valve in fluid communication with the pressure chamber and extending along a valve axis; and
a rupture disc in fluid communication with the pressure chamber in series downstream fluid communication with the fill valve.

2. The gas spring of claim 1, further comprising a fill valve cartridge including a valve housing having a valve housing passage extending along the valve axis, and a fill valve assembly carried by the valve housing and having a valve seat carried in the valve housing passage, wherein the fill valve is carried by the valve seat and is movable rectilinearly along the valve axis, and the fill valve has a valve head at one end and a valve stem extending from the valve head and through the valve housing passage.

3. The gas spring of claim 2, further comprising an overpressure relief plug, which includes:
a plug housing having a plug passage extending along the valve axis,
the rupture disc carried by the plug housing transversely across the plug passage; and
a disc retainer carried by the plug housing to retain the rupture disc to the plug housing, and including:
a first end,
a second end extending axially beyond the first end of the plug housing and having an end wall extending transversely across the valve axis and in contact with the valve stem of the fill valve cartridge, and
a retainer passage between the first and second ends of the retainer in fluid communication with the rupture disc.

4. The gas spring of claim 3, wherein the plug housing includes a first open end having a housing cylindrical portion with external and internal threads, a second open end, and a through passage extending along the valve axis between the open ends, and the disc retainer includes a retainer cylindrical portion with external threads in threaded engagement with the internal threads of the housing cylindrical portion of the plug housing, and wherein the disc retainer also includes a central passage extending along the valve axis and a port transversely oriented with respect to the valve axis.

5. The gas spring of claim 1, further comprising:
an overpressure relief plug including a plug housing carrying the rupture disc; and
a fill valve cartridge including:
a valve housing,
a fill valve assembly carried in the valve housing and having the fill valve, and
a seal between the valve housing and the plug housing of the overpressure relief plug.

6. The gas spring of claim 5, wherein the overpressure relief plug also includes a disc retainer carried by the plug housing to retain the rupture disc to the plug housing, wherein the seal is carried around the disc retainer.

7. The gas spring of claim 6, further comprising another seal carried around the valve housing, wherein the fill valve assembly also has a valve seat carrying the fill valve, which is movable rectilinearly along the valve axis, and has a valve head at one end and a valve stem extending from the valve head and through the valve housing passage, wherein the seal engages corresponding sealing surfaces of the plug housing and the valve housing and the disc retainer also includes a transversely extending end wall that engages the valve stem to open the valve, such that a sealed a fluid overpressure relief flow path is established between the pressure chamber and the rupture disc.

8. The gas spring of claim 1, wherein the casing includes a fill port in fluid communication with the pressure chamber, and wherein the fill valve and the rupture disc are both carried in the fill port of the casing.

9. The gas spring of claim 8, further comprising a fill valve cartridge including the fill valve carried in a valve housing, and an overpressure relief plug including the rupture disc carried in a plug housing, wherein the valve and plug housings are threadingly coupled to the fill port of the casing.

10. An overpressure relief plug extending axially along a longitudinal axis, comprising:
a plug housing including:
a first end,
an open second end, and
a passage extending along the longitudinal axis between the open ends; and
a rupture disc carried by the plug housing; and
a disc retainer carried by the plug housing to retain the rupture disc to the plug housing, and including a through passage in fluid communication with the rupture disc,
wherein at least one of the plug housing or the disc retainer includes an end wall extending transversely across the longitudinal axis.

11. The plug of claim 10, wherein at least one of the retainer or the housing includes a reverse conical taper between the transversely extending end wall and the threaded cylindrical portion of the housing, wherein a seal is carried between the taper and the cylindrical portion between the end wall and a threaded cylindrical portion of the plug housing, and wherein the retainer also includes opposed fastener flats intersecting the reverse conical taper and through which the transversely oriented port extends.

12. The plug of claim 10, wherein the rupture disc and the retainer are received into the first open end of the plug housing, wherein the retainer extends axially beyond the first end of the plug housing and includes a retainer passage between the first and second ends of the retainer in fluid communication with the rupture disc and including a central passage extending along the longitudinal axis and communicating with a port transversely oriented with respect to the longitudinal axis.

13. The plug of claim 10, wherein the rupture disc and the retainer are received into the second end of the plug housing, and the plug housing includes a port transversely oriented with respect to the longitudinal axis and in communication with the plug housing passage.

14. The plug of claim 10, wherein the plug housing second end includes a head having an outer diameter larger than that of the first end cylindrical portion and a fastener tool passage in fluid communication with the through passage and having tooling features, and wherein the plug further comprises a seal carried by the plug housing between the head and the first end cylindrical portion.

15. A gas spring including a fill valve, and the plug of claim 10 in series downstream communication with the fill valve.
